# EUROPÄISCHE PATENTANMELDUNG

(11) **EP 1 160 140 A2**
(43) Veröffentlichungstag der Anmeldung: **05.12.2001**
(21) Anmeldenummer: 01112317.1
(22) Anmeldetag: 19.05.2001
(51) Int. Cl.: B60T 7/04, B60T 8/32, B60T 13/68, B62D 5/07

(54) **Hydrauliksystem zum Betätigen von wenigstens zwei Funktionsbereichen in einem Fahrzeug, vorzugsweise zum Lenken und Schalten eines Kraftfahrzeuges**

(30) Priorität: 03.06.2000 DE 10027734
(71) Anmelder: Hydraulik-Ring GmbH, 09212 Limbach-Oberfrohna (DE)
(72) Erfinder: Trzmiel, Alfred, 72661 Grafenberg (DE); Stephan, Wolfgang, 72622 Zizishausen (DE); Meyer, Roland, 91154 Roth (DE); Wild, Andreas, 72669 Unterensingen (DE)
(74) Vertreter: Jackisch-Kohl, Anna-Katharina

(57) **Zusammenfassung**

Das Hydrauliksystem hat einen Tank für das Hydraulikmedium, von dem aus das Hydraulikmedium über ein Verteilerventil zwei Funktionsbereichen zuführbar ist. Das Verteilerventil ist an eine Steuereinheit (26) angeschlossen und steuert den Strom des Hydraulikmediums zu den beiden Funktionsbereichen so, daß der eine Funktionsbereich Vorrang vor dem anderen Funktionsbereich hat. Um das Hydrauliksystem so auszubilden, daß es im Fahrzeug optimal eingesetzt werden, ist an die Steuereinheit (26) eine Bremseinrichtung (3) angeschlossen, die einen Bremskraftverstärker (34) und einen Hauptbremszylinder (41) aufweist, von denen der Bremskraftverstärker (34) über ein Bremsventil (40) an die Steuereinheit (26) angeschlossen ist. Dadurch läßt sich die Bremseinrichtung (3) unmittelbar von der Steuereinrichtung (26) betätigen, beispielsweise über eine Abstandsregelung des Fahrzeuges. Das Hydrauliksystem eignet sich zum Betätigen der Lenkung, des Bremssystems und des Schaltgetriebes oder beispielsweise zum Betätigen eines Schiebedaches eines Fahrzeuges.

## Beschreibung

Die Erfindung betrifft ein Hydrauliksystem zum Betätigen von wenigstens zwei Funktionsbereichen in einem Fahrzeug, vorzugsweise zum Lenken und Schalten eines Kraftfahrzeuges, nach dem Oberbegriff des Anspruches 1.

Es ist bekannt, in Fahrzeugen für das Lenksystem und ein automatisiertes Handschaltgetriebe ein Hydrauliksystem vorzusehen, mit dem die den beiden Funktionsbereichen zugeordneten Ventile betätigt werden können. Ein Verteilerventil sorgt dafür, daß die beiden Funktionsbereiche mit einer ausreichenden Menge an Hydraulikmedium versorgt werden.

Der Erfindung liegt die Aufgabe zugrunde, das gattungsgemäße Hydrauliksystem so auszubilden, daß es im Fahrzeug optimal eingesetzt werden kann.

Diese Aufgabe wird beim gattungsgemäßen Hydrauliksystem erfindungsgemäß mit den kennzeichnenden Merkmalen des Anspruches 1 gelöst.

Beim erfindungsgemäßen Hydrauliksystem ist an die Steuereinheit die Bremseinrichtung des Fahrzeuges angeschlossen. Dadurch läßt sich die Bremseinrichtung unmittelbar von der Steuereinrichtung betätigen, beispielsweise über eine Abstandsregelung des Fahrzeuges. Wird der Abstand zum vorausfahrenden Fahrzeug zu gering, greift die Steuereinheit selbsttätig ein und betätigt die Bremseinrichtung, auch wenn der Fahrer des Fahrzeuges noch nicht das Bremspedal betätigt hat.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung ein erfindungsgemäßes Hydrauliksystem,
- Fig. 2: in einer Darstellung entsprechend Fig. 1 eine zweite Ausführungsform eines erfindungsgemäßen Hydrauliksystems,
- Fig. 3: einen Gesamtschaltplan des erfindungsgemäßen Hydrauliksystems,
- Fig. 4: einen Gesamtschaltplan des erfindungsgemäßen Hydrauliksystems, wenn die Bremse geöffnet ist,
- Fig. 5: den Gesamtschaltplan gemäß Fig. 4, wenn die Bremse geschlossen ist,
- Fig. 6: in schematischer Darstellung das erfindungsgemäße Hydrauliksystem in einem Kraftfahrzeug.

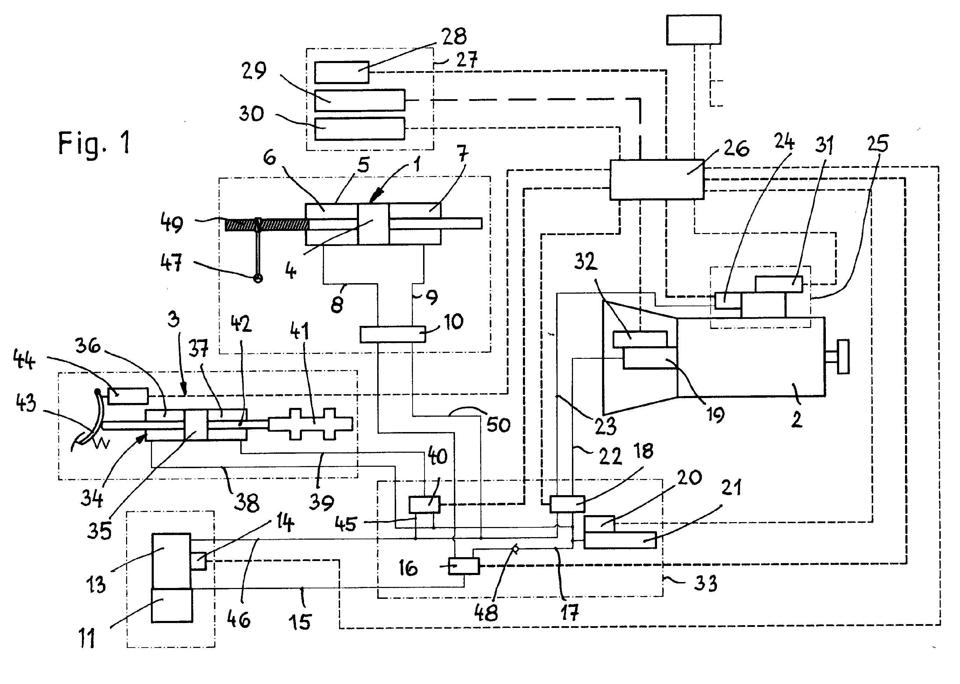

Mit dem Hydrauliksystem gemäß den Fig. 1 bis 6 werden drei Funktionen in einem Kraftfahrzeug betätigt. In den dargestellten Ausführungsbeispielen dient das Hydrauliksystem zur Betätigung der Lenkung, des Bremssystems und des Schaltgetriebes, das eine elektro- oder elektronisch-hydraulische Getriebeschaltung einschließlich der Kupplungsbetätigung sein kann. Das Hydrauliksystem kann aber auch beispielsweise zur Betätigung eines Schiebedaches im Kraftfahrzeug oder dergleichen eingesetzt werden.

Fig. 1 zeigt das Hydrauliksystem, mit dem eine Lenkung 1, ein Getriebe 2 und eine Bremseinrichtung 3 betätigt werden können. Die Lenkung 1 hat einen beidseitig beaufschlagbaren Kolben 4, der in einem Zylinder 5 verschiebbar ist. Der Kolben 4 trennt zwei Zylinderräume 6 und 7 voneinander, in die jeweils eine Leitung 8, 9 mündet, über die Hydraulikmedium zugeführt wird. Die Zufuhr des Hydraulikmediums in die Zylinderräume 6, 7 wird durch ein 4/3-Wegeventil 10 gesteuert.

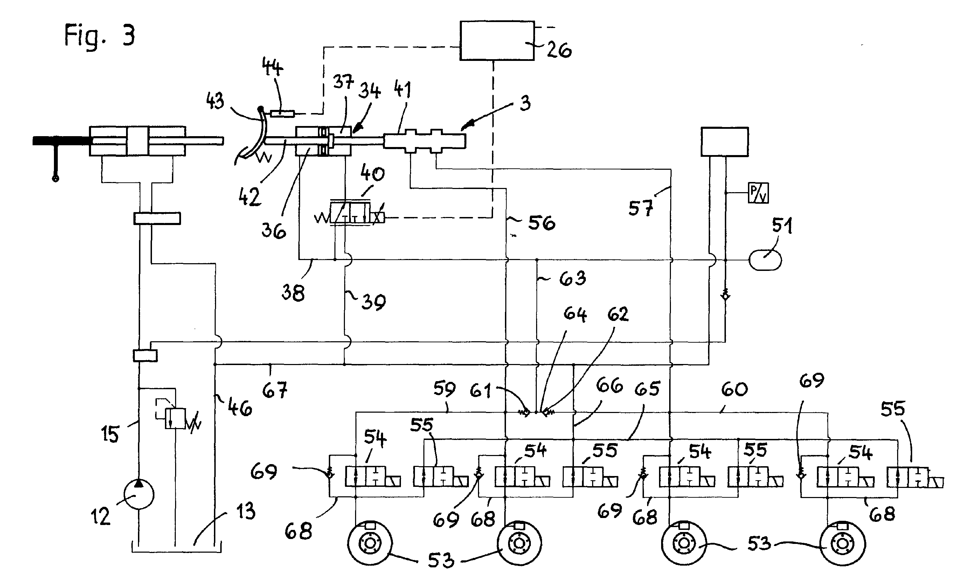

Das Hydraulikmedium wird mittels eines Motors 11 und einer Pumpe 12 (Fig. 3) aus einem Tank 13 gefördert. Er ist vorteilhaft mit einem Füllstandssensor 14 versehen, der den Füllgrad des Tanks 13 überwacht. Das Hydraulikmedium wird über eine Druckleitung 15 einem Zuschaltventil 16 zugeführt. Die von der Lenkung 1 kommende Hydraulikleitung 8 ist ebenfalls an das Zuschaltventil 16 angeschlossen. Von ihm führt eine weitere Hydraulikleitung 17 über ein Kupplungsventil 18 zu einer Kupplung 19, die dem Getriebe 2 zugeordnet ist. Das Zuschaltventil 16 sorgt dafür, daß die Lenkung 1, die Kupplung 19 und das Getriebe 2 gleichzeitig mit Hydrauliköl versorgt werden. Dabei ist das Zuschaltventil 16 so ausgebildet, daß die Zufuhr des Hydraulikmediums zur Lenkung 1 stets Priorität hat. Dadurch wird gewährleistet, daß das Fahrzeug auf jeden Fall lenkbar bleibt.

Dem Kupplungsventil 18 sind ein Drucksensor 20 und ein Speicher 21 zugeordnet. Eine Leitung 22 verbindet das Kupplungsventil 18 mit der Kupplung 19. Außerdem ist das Kupplungsventil 18 über eine Leitung 23 mit einem Ventilblock 24 eines Gangstellers 25 verbunden, mit dem in bekannter Weise die Gassen des Getriebes ausgewählt und die Gänge in der ausgewählten Gasse eingelegt werden. Es handelt sich somit um ein automatisiertes Handschaltgetriebe, bei dem der Fahrer des Kraftfahrzeuges über einen entsprechenden Hebel oder über Tasten die von ihm gewünschten Gänge auswählt. Der Gangsteller 25, die Kupplung 19 und das Kupplungsventil 18 sind an eine Steuereinheit 26 angeschlossen, mit der die Funktionen dieser Teile überwacht und gesteuert werden. Die Steuereinheit 26 kann vom Fahrerhaus 27 aus betätigt werden. Wie Fig. 1 beispielhaft zeigt, können im Fahrerhaus 27 ein Display 28, ein Fahrschalter 29 und eine Parksperre 30 an die Steuereinheit 26 angeschlossen sein. Dem Getriebe 2 und der Kupplung 19 sind Wegsensoren 31, 32 zugeordnet, die an die Steuereinheit 26 angeschlossen sind und mit denen der Verschiebeweg von Kolben überwacht werden kann, die Teil des Gangstellers 25 und der Kupplung 19 sind. Der Gangsteller 25 hat Zylinder zur Gassenwahl und zur Gangeinlegebewegung. Jedem Zylinder des Gangstellers 25 ist jeweils ein Wegsensor 31 zugeordnet, der vorteilhaft berührungslos arbeitet. In gleicher Weise arbeitet auch der Wegsensor 32 der Kupplung 19 vorteilhaft berührungslos. Das Kupplungsventil 18 ist mit einer Schutzfunktion gegen Spannungsabfall ausgestattet.

Das Zuschaltventil 16, das Kupplungsventil 18, der Drucksensor 20 und der Speicher 21 sind Bestandteil eines Ventilblocks 33, der zur Ölverteilung herangezogen wird.

Wird das Hydrauliksystem eingeschaltet, wird das Füllen des Speichers 21 durch die Steuereinheit 26 überwacht. Ist der Speicher 21 gefüllt, erhält das Kupplungsventil 18 von der Steuereinheit 26 ein Signal zum Öffnen. Hat der Speicher 21 des Kupplungsventils 18 ausreichend Hydrauliköl, wird das Zuschaltventil 16 über die Steuereinheit 26 zurückgeschaltet. Sobald die Kupplung geöffnet ist, ist es über die Steuereinheit 26 möglich, den Verbrennungsmotor des Fahrzeuges anzulassen.

Das Hydrauliksystem umfaßt die Bremseinrichtung 3, die einen Bremskraftverstärker 34 aufweist, in dem ein Kolben 35 verschiebbar ist. Er trennt zwei Druckräume 36, 37 im Bremskraftverstärker 34 voneinander. In die Druckräume 36, 37 mündet jeweils eine Leitung 38, 39. Die in den Druckraum 36 mündende Leitung 38 ist an ein Bremsventil 40 sowie an die zum Kupplungsventil 18 führende Leitung 17 angeschlossen. Die in den Druckraum 37 mündende Leitung 39 ist an das Bremsventil 40 angeschlossen. Es ist seinerseits an die Steuereinheit 26 angeschlossen.

Dem Bremskraftverstärker 34 nachgeschaltet ist ein Hauptbremszylinder 41, der in bekannter Weise durch eine aus dem Bremskraftverstärker 34 ragende Kolbenstange 42 betätigt wird. Sie wird mittels eines Bremspedals 43 verschoben, das im Kraftfahrzeug vorgesehen und gegen Federkraft verschwenkbar ist. Der Schwenkweg des Bremspedals 43 wird durch einen Sensor 44 erfaßt, der an die Steuereinheit 26 angeschlossen ist.

Das Bremsventil 40 ist über eine Leitung 45 mit einer Tankleitung 46 verbunden, die den Tank 13 mit dem Kupplungsventil 18 verbindet. Das Bremsventil 40 ist im Ventilblock 33 vorgesehen.

Das Zuschaltventil 16 besteht vorteilhaft aus einem (nicht dargestellten) Stromregelventil und einem (nicht dargestellten) Schaltmagnetventil.

Ist ein Lenkrad 47 des Kraftfahrzeuges nicht eingeschlagen, nimmt der Kolben 4 der Lenkung 1 die in Fig. 1 dargestellte Mittelstellung ein. Das vorgeschaltete Wegeventil 10 ist ebenfalls in Mittelstellung geschaltet, so daß sich das Hydrauliköl ohne Druck im Umlauf befindet. Das Zuschaltventil 16 sorgt dafür, daß der größere Teil des Hydrauliköls zur Lenkung 1 gelangt, während ein kleinerer Teil über die Leitung 17, in der ein in Richtung auf das Kupplungsventil 18 öffnendes Rückschlagventil 48 sitzt, zum Kupplungsventil 18 gelangt. Beispielhaft ist das Zuschaltventil 16 so ausgebildet, daß 80 % des Hydrauliköls zur Lenkung 1 gelangen, während 20 % zum Kupplungsventil 18 strömen. Über die Leitung 22 ist das Kupplungsventil 18 mit der Kupplung 19 verbunden. Über die Leitung 23 ist an das Kupplungsventil 18 der Gangsteller 25 angeschlossen, mit dem die gewünschte Gasse des Getriebes 2 ausgewählt und der entsprechende Gang eingelegt wird. Die Ausbildung des Gangstellers 25 ist bekannt und wird darum auch nicht näher erläutert.

Wird das Lenkrad 47 gedreht, erfolgt im Zylinder 5 der Lenkung 1 ein Druckaufbau. Wird beispielsweise das Lenkrad 47 in der Darstellung gemäß Fig. 1 nach rechts gedreht, dann wird über eine Lenkspindel 49 der Kolben 4 nach rechts bewegt. Das Wegeventil 10 wird so geschaltet, daß das Hydraulikmedium aus dem Tank 13 über die Leitung 8 in den Druckraum 6 des Lenkzylinders 5 gelangt. Das Hydraulikmedium im anderen Druckraum 7 strömt über die Leitung 9, das Wegeventil 10, eine daran angeschlossene Tankleitung 15 und die Tankleitung 46 zurück zum Tank 13.

Erfolgt der Lenkeinschlag in umgekehrter Richtung, kehren sich die Verhältnisse entsprechend um.

Sobald das Lenkrad 47 nicht mehr gedreht wird, wird über das Zuschaltventil 16 die Ölzufuhr wieder so aufgeteilt, daß der größte Teil des Hydraulikmediums weiterhin zur Lenkung 1 und ein kleinerer Teil zum Kupplungsventil 18 gelangt.

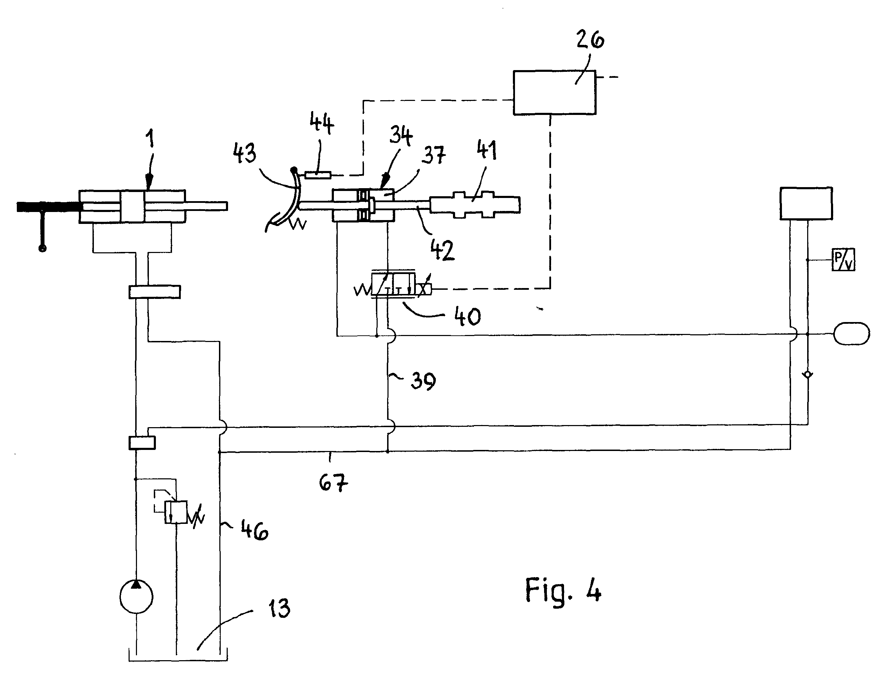

Die Bremseinrichtung 3 bildet eine hydraulische Bremskraftverstärkung. Infolge des Differentialkolbens 35 zeichnet sich die Bremseinrichtung 3 durch ihre Feinfühligkeit aus. Bei einer Druckentlastung erfolgt eine äußerst rasche Reaktion der Bremseinrichtung 3. Die Hydraulikölversorgung der Bremseinrichtung 3 erfolgt aus einem Druckspeicher 51 (Fig. 3), in dem ein vorgegebener Mindestdruck von beispielsweise etwa 40 bis etwa 55 bar herrscht. Bei normalem Bremsvorgang wird über den Sensor 44 erfaßt, wenn das Bremspedal 43 betätigt wird. Da der Sensor 44 an die Steuereinheit 26 angeschlossen ist, sendet diese entsprechende Signale an das Bremsventil 40, so daß dieses so geschaltet wird, daß der Druckraum 37 zum Tank 13 hin entlastet wird. Beim Drücken des Bremspedals 43 wird über die Kolbenstange 42 der Hauptbremszylinder 41 betätigt und der Bremsvorgang durchgeführt. Dies wird anhand der Fig. 3 und 4 noch näher erläutert werden.

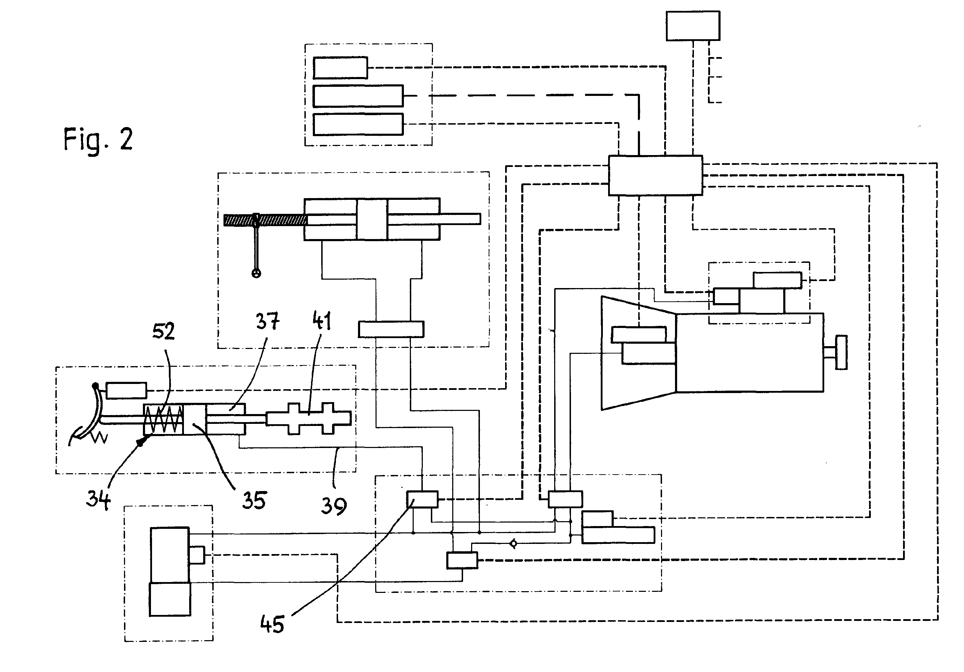

Das Hydrauliksystem gemäß Fig. 2 unterscheidet sich vom vorigen Ausführungsbeispiel lediglich dadurch, daß der Kolben 35 in Richtung auf den Hauptbremszylinder 41 durch wenigstens eine Druckfeder 52 belastet ist. Dementsprechend ist lediglich der Druckraum 37 des Bremskraftverstärkers 34 über die Leitung 39 an das Bremsventil 45 angeschlossen. Im übrigen ist dieses Hydrauliksystem gleich ausgebildet wie das Ausführungsbeispiel nach Fig. 1.

Fig. 3 zeigt das Hydrauliksystem, bei dem die Bremseinrichtung 3 mit einer ABS-Funktion ausgebildet ist. Jedem Fahrzeugrad 53 sind in bekannter Weise Magnetventile 54, 55 zugeordnet, mit denen der Durchfluß des Hydraulikmediums gesteuert wird. Die Magnetventile 54, 55 sind in bekannter Weise über Hydraulikleitungen 56, 57 an den Hauptbremszylinder 41 der Bremseinrichtung 3 angeschlossen. Über dieses ABS-System wird unabhängig von der Bremspedalbewegung das Fahrzeug in bekannter Weise zuverlässig abgebremst.

Die Magnetventile 54 haben jeweils eine Hydraulikleitung 59, 60, die jeweils an die Hydraulikleitung 56, 57 des Hauptbremszylinders 41 angeschlossen sind. Die beiden Hydraulikleitungen 59, 60 sind gegeneinander durch jeweils ein Rückschlagventil 61, 62 gesperrt. Der Druckraum 36 des Bremszylinders 34 ist über die Hydraulikleitung 38 mit dem Druckspeicher 51 verbunden. Von der Hydraulikleitung 38 zweigt eine Hydraulikleitung 63 ab, die im Bereich zwischen den beiden Rückschlagventilen 61, 62 in eine Hydraulikleitung 64 mündet.

Bei geöffnetem Rückschlagventil 61 bzw. 62 ist die Hydraulikleitung 63 mit der Hydraulikleitung 59 bzw. 60 verbunden.

Die Magnetventile 55 sind an eine gemeinsame Hydraulikleitung 65 angeschlossen, die über eine Hydraulikleitung 66 mit einer Tankleitung 67 verbunden ist. Sie schließt an die Tankleitung 46 an.

Die Magnetventile 55 sind über jeweils eine Leitung 68 mit der Hydraulikleitung 59 bzw. 60 verbunden. In der Leitung 68 sitzt jeweils ein Rückschlagventil 69, das in Richtung auf das Magnetventil 55 sperrt.

Wird das Bremspedal 43 betätigt, erhält die Steuereinheit 26 über den Sensor 44 ein Signal. Sie schaltet das Bremsventil 40 um, so daß das Hydraulikmedium aus dem Druckraum 37 des Bremskraftverstärkers 34 über die Leitungen 39, 67, 46 zum Tank 13 hin entlastet ist. Über die Kolbenstange 42 wird der Hauptbremszylinder 41 betätigt. Das ABS-System arbeitet in bekannter Weise, indem Sensoren die Umfangsgeschwindigkeit der Fahrzeugräder 53 überwachen. Das Hydraulikmedium strömt über die Leitungen 56, 57 zu den Magnetventilen 54 und über die Leitungen 68 zu den benachbarten Magnetventilen 55. Von dort strömt das Medium durch die benachbarten Magnetventile 55. Das ABS-System arbeitet in bekannter Weise. Sobald eines der Fahrzeugräder 53 beim Bremsvorgang blockiert, werden die Magnetventile des entsprechenden Fahrzeugrades 53 so geschaltet, daß die Bremswirkung verringert wird und das Fahrzeugrad nicht mehr blockiert. Sobald dieses Fahrzeugrad wieder eine vorgegebene Umfangsgeschwindigkeit hat, werden die entsprechenden Magnetventile 54, 55 umgeschaltet und dieses Rad erneut gebremst.

Anhand von Fig. 4 wird der Fall beschrieben, daß bei der Ausführungsform gemäß Fig. 1 ein Systemausfall eintritt. In diesem Falle bleibt die Bremse geöffnet, so daß das Fahrzeug ohne Zusatzaufwand abgeschleppt werden kann. Dennoch bleibt die manuelle Funktion der Bremse über das Bremspedal 43 aufrechterhalten, allerdings ohne die Bremskraftunterstützung des Bremskraftverstärkers 34 mit dem Hauptbremszylinder 41. Ein Systemausfall kann beispielsweise dann eintreten, wenn der Druck im Hydrauliksystem abfällt und/oder der Ventilstrom ausfällt. Tritt in einem solchen Fall der Fahrer des Fahrzeuges auf das Bremspedal 43, betätigt er den Sensor 44, wodurch über die Steuereinheit 26 das Bremsventil 40 aus der in Fig. 4 gezeigten Stellung umgeschaltet wird. Beim Niedertreten des Bremspedals 43 kann dann das im Druckraum 37 des Bremskraftverstärkers 34 befindliche Hydraulikmedium über das Bremsventil 40 und die Leitungen 39, 67 und 46 zum Tank 13 verdrängt werden. Mit der Kolbenstange 42 des Bremskraftverstärkers 34 kann der Hauptbremszylinder 41 für den Bremsvorgang betätigt werden.

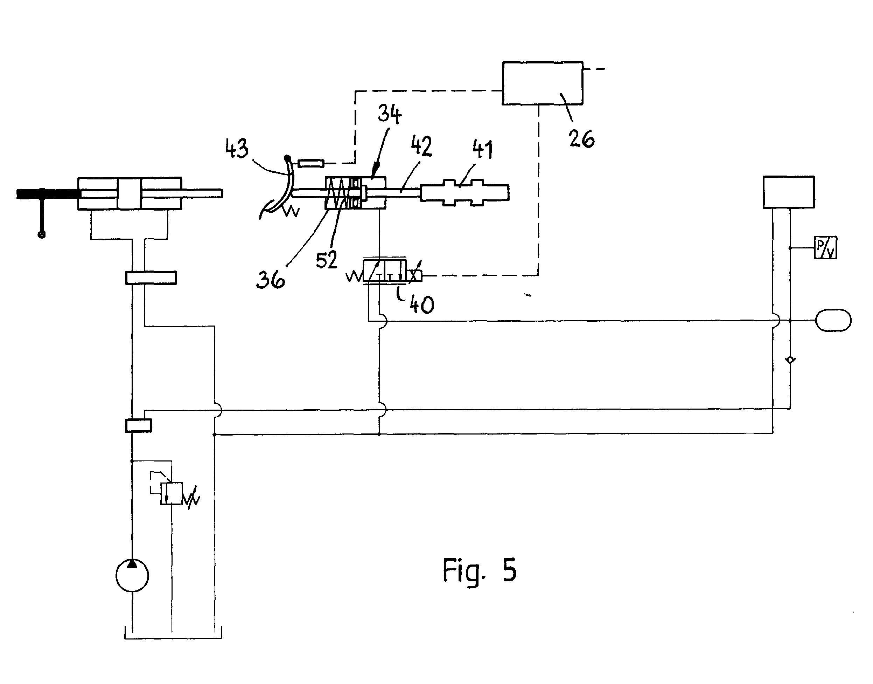

Anhand von Fig. 5 wird der Fall beschrieben, daß bei der Ausführungsform gemäß Fig. 2 bei einem Systemausfall die Bremse geschlossen ist, so daß am Bremskraftverstärker 34 der volle Bremsdruck anliegt. Bei einem Systemausfall sorgt die im Druckraum 36 des Bremskraftverstärkers 34 untergebrachte Druckfeder 52 dafür, daß die Kolbenstange 42 verschoben und damit der Hauptbremszylinder 41 betätigt wird. Im Notfall wird somit die Bremse automatisch betätigt, ohne daß der Fahrer das Bremspedal 43 drücken muß. Am Bremskraftverstärker 34 liegt durch die Kraft der Feder 52 der volle Bremsdruck an. Das Fahrzeug kann über das anhand von Fig. 3 beschriebene ABS-System zum Stillstand abgebremst werden. In der Steuereinheit 26 können unterschiedliche Bremsprogramme abgelegt sein, zum Beispiel für eine Vollbremsung, ein gezieltes langsames Abbremsen und dergleichen. Durch die Steuereinheit 26 wird dadurch gewährleistet, daß das Fahrzeug zuverlässig auch bei einem Systemausfall abgebremst wird.

Wie anhand von Fig. 3 erläutert worden ist, übernimmt das Hydrauliksystem auch die ABS-Funktion des Fahrzeuges. Der Bremsdruck wird an jedem gebremsten Fahrzeugrad 53 durch die Magnetventile 54, 55 gesteuert. Dadurch kann das herkömmliche ABS-System mit Steuereinheit, Motor, Pumpe und dergleichen entfallen. Da der Bremskraftverstärker 34 durch den Druckspeicher 51 versorgt wird, ist ein rasches Ansprechen bzw. eine hohe Dynamik gewährleistet. Auch bei einem Ausfall der Pumpe 12 des Hydrauliksystems wird durch den Speicherinhalt des Druckspeichers 51 gewährleistet, daß das Fahrzeug zuverlässig mit Bremskraftunterstützung abgebremst wird.

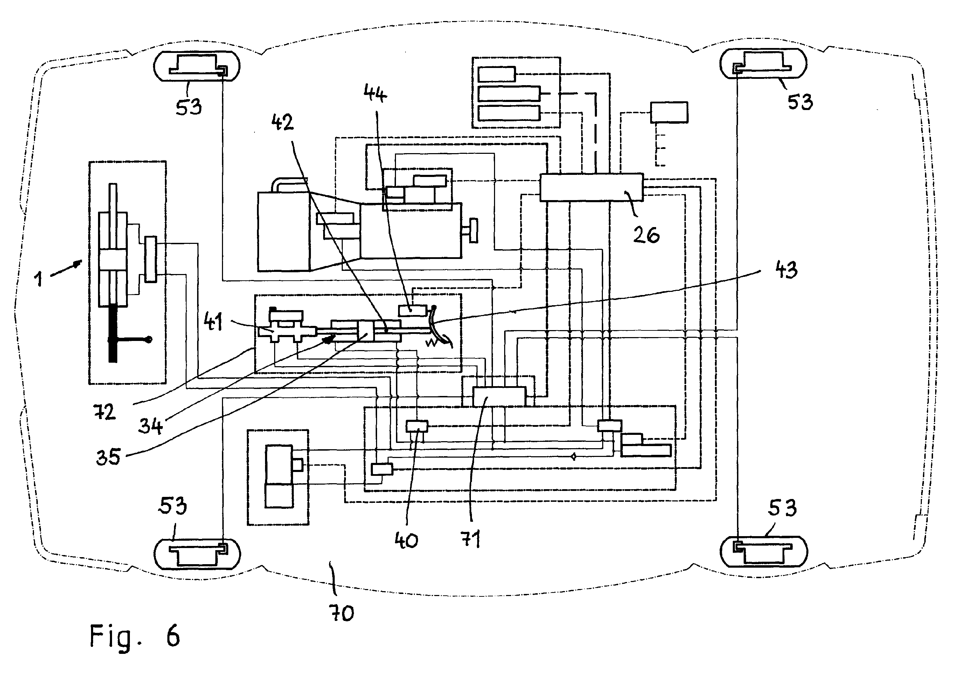

Fig. 6 zeigt in schematischer Darstellung den Einbau des Hydrauliksystems in ein Kraftfahrzeug 70. Die Magnetventile 54, 55 des ABS-Systems sind in einem Ventilblock 71 zusammengefaßt, der von der Steuereinheit 26 angesteuert wird. Die Steuereinheit 26 liefert weitere Signale für ein ESP-System, eine Abstandsregelung und dergleichen. Sogar eine Notbremsfunktion bei Erkennen kritischer Situationen ist möglich. Solche kritischen Situationen sind beispielsweise eine blockierte Fahrbahn oder ein Hindernis auf der Fahrbahn. Diese Hindernisse werden aufgrund der Abstandsregelung erkannt, so daß sie entsprechende Signale an die Steuereinheit 26 sendet. Sie schickt in diesem Augenblick unabhängig von der Bewegung des Bremspedals 43 Signale an den Ventilblock 41 des ABS-Systems, das dadurch augenblicklich in Funktion tritt. Auf diese Weise wird die Schrecksekunde des Fahrers kompensiert und der Bremsvorgang eingeleitet, noch bevor der Fahrer auf das Bremspedal 43 tritt. Die Bremsen des Kraftfahrzeuges 70 können somit fahrerunabhängig betätigt werden, was beispielsweise für die aktive Abstandsregelung und das ESP-System notwendig ist. Die Bremskraftverstärkerfunktion wird von der Fahrpedalstellung entkoppelt. Die Verstärkungsfunktion wird über den Sensor 44 am Bremspedal 43 und das Proportionalwegeventil 40 gesteuert. Es ist an die Steuereinheit 26 angeschlossen, so daß dieses Ventil augenblicklich von der Steuereinheit 26 angesteuert werden kann. Das Sicherheitskonzept für den Notfall wird durch die weiterhin mögliche manuelle Betätigung der Bremse ohne Bremskraftunterstützung gewährleistet. Durch Betätigen des Bremspedals 43 wird der Kolben 35 im Bremskraftverstärker 34 verschoben. Mit der den Kolben 45 tragenden Kolbenstange 42 wird der Hauptbremszylinder 41 ohne Beeinflussung durch die Druckverhältnisse im Bremskraftverstärker mechanisch betätigt.

Da das Bremsventil 40 durch die Steuereinheit 26 angesteuert wird, kann durch ein in der Steuereinheit abgelegtes Programm das Gewicht des Fahrzeuges 70 berücksichtigt werden, um eine optimale Bremskraftverstärkung in Abhängigkeit von der Fahrzeuggeschwindigkeit und der Fahrzeugmasse zu erhalten. Der Bremskraftverstärker 34 und der Hauptbremszylinder 41 bilden einen Bremsassistenten 72, der eine extrem kurze Reaktionszeit von beispielsweise nur 5 ms hat. Bei herkömmlichen ABS-Systemen ist für den Bremskraftverstärker Unterdruck notwendig. Bei Diesel- oder Turbomotoren ist häufig ein genügender Unterdruck nicht vorhanden. Das beschriebene Hydrauliksystem ermöglicht die Verwendung eines herkömmlichen ABS-Systems auch bei derartigen Motoren.

## Patentansprüche

1. Hydrauliksystem zum Betätigen von wenigstens zwei Funktionsbereichen in einem Fahrzeug, vorzugsweise zum Lenken und Schalten eines Kraftfahrzeuges, mit wenigstens einem Tank für das Hydraulikmedium, von dem aus das Hydraulikmedium über ein Verteilerventil den beiden Funktionsbereichen zuführbar ist, das an eine Steuereinheit angeschlossen ist und den Strom des Hydraulikmediums zu den beiden Funktionsbereichen so steuert, daß der eine Funktionsbereich Vorrang vor dem anderen Funktionsbereich hat,
**dadurch gekennzeichnet, daß** an die Steuereinheit (26) eine Bremseinrichtung (3) angeschlossen ist, die einen Bremskraftverstärker (34) und einen Hauptbremszylinder (41) aufweist, von denen der Bremskraftverstärker (34) über ein Bremsventil (40) an die Steuereinheit (26) angeschlossen ist.

2. Hydrauliksystem nach Anspruch 1,
**dadurch gekennzeichnet, daß** das Bremsventil (40) ein Proportional-Wegeventil ist.

3. Hydrauliksystem nach Anspruch 1 oder 2,
**dadurch gekennzeichnet, daß** der Bremskraftverstärker (34) zwei durch einen Kolben (35) getrennte Druckräume (36, 37) aufweist, von denen der eine Druckraum (37) an das Bremsventil (40) angeschlossen ist.

4. Hydrauliksystem nach Anspruch 3,
**dadurch gekennzeichnet, daß** der Kolben (35) auf einer Kolbenstange (42) sitzt, mit der der Hauptbremszylinder (41) betätigbar ist.

5. Hydrauliksystem nach Anspruch 3 oder 4,
**dadurch gekennzeichnet, daß** der dem Hauptbremszylinder (41) zugewandte Druckraum (37) des Bremskraftverstärkers (34) mit dem Bremsventil (40) verbunden ist.

6. Hydrauliksystem nach einem der Ansprüche 3 bis 5,
**dadurch gekennzeichnet, daß** der andere Druckraum (36) des Bremskraftverstärkers (34) an einen Druckspeicher (51) für das Hydraulikmedium angeschlossen ist.

7. Hydrauliksystem nach einem der Ansprüche 1 bis 6,
**dadurch gekennzeichnet, daß** an die Steuereinheit (26) ein Sensor (44) eines Bremspedals (43) angeschlossen ist.

8. Hydrauliksystem nach einem der Ansprüche 1 bis 7,
**dadurch gekennzeichnet, daß** an den Hauptbremszylinder (41) ein ABS-System angeschlossen ist.

9. Hydrauliksystem nach Anspruch 8,
**dadurch gekennzeichnet, daß** das ABS-System jedem Fahrzeugrad (53) zugeordnete Ventile (54, 55) aufweist.

10. Hydrauliksystem nach einem der Ansprüche 1 bis 9,
**dadurch gekennzeichnet, daß** die Steuereinheit (26) eine Abstandsregelung steuert.

11. Hydrauliksystem nach Anspruch 10,
**dadurch gekennzeichnet, daß** das ABS-System von der Steuereinheit (26) in Abhängigkeit von Signalen der Abstandsregelung eingeschaltet wird.

12. Hydrauliksystem, insbesondere nach einem der Ansprüche 1 bis 11,
**dadurch gekennzeichnet, daß** die Ansteuerung des Bremskraftverstärkers (34) durch die Steuereinheit (26) unabhängig von der Betätigung des Bremspedals (43) erfolgt.

13. Hydrauliksystem nach einem der Ansprüche 9 bis 12,
**dadurch gekennzeichnet, daß** das ABS-System an den Druckspeicher (51) angeschlossen ist.
